(19) Europäisches Patentamt
European Patent Office
Office européen des brevets

(11) **EP 4 682 468 A1**

(12) **EUROPEAN PATENT APPLICATION**

(43) Date of publication:
**21.01.2026 Bulletin 2026/04**

(21) Application number: **24275090.9**

(22) Date of filing: **19.07.2024**

(51) International Patent Classification (IPC):
***G01C 21/00*** *(2006.01)*

(52) Cooperative Patent Classification (CPC):
**G01C 21/005**

| | |
|---|---|
| (84) Designated Contracting States:<br>**AL AT BE BG CH CY CZ DE DK EE ES FI FR GB GR HR HU IE IS IT LI LT LU LV MC ME MK MT NL NO PL PT RO RS SE SI SK SM TR**<br>Designated Extension States:<br>**BA**<br>Designated Validation States:<br>**GE KH MA MD TN**<br><br>(71) Applicant: **MBDA UK Limited**<br>**Stevenage, Hertfordshire SG1 2DA (GB)** | (72) Inventor: **The designation of the inventor has not yet been filed**<br><br>(74) Representative: **BAE SYSTEMS plc**<br>**Group IP Department**<br>**Victory Point**<br>**Frimley**<br>**Camberley, Surrey GU16 7EX (GB)** |

(54) **NAVIGATION METHOD**

(57) There is disclosed a navigation method for an airborne platform. The airborne platform has a ground-facing camera having a field of view, and the method comprises repeating a data capture cycle. The data capture cycle comprises the steps of: moving the sight-line of the camera through a range of directions; recording events triggered during motion of the sightline, each event being a change in intensity recorded at a pixel of the camera, and associating each event with a ground-referenced position; and, for each ground-referenced position, determining, from the recorded events, a resultant intensity gradient direction. Relative motion of the platform is determined by comparing a distribution of resultant gradient intensities obtained in a current data capture cycle with a distribution of resultant gradient intensities obtained in an earlier data capture cycle.

Fig 2

EP 4 682 468 A1

## Description

FIELD OF THE INVENTION

This invention relates to a navigation method, and to an apparatus used to implement the navigation method.

BACKGROUND OF THE INVENTION

A number of ways in which the location of a platform can be determined are known. Satellite-based systems, such as the global positioning system are now commonly used, but may not always be available, for example because signals from the satellites are obstructed. It is a particular problem in military applications, when it is also possible for the signals to be jammed or otherwise interrupted. Under these circumstances alternative ways of determining location must be used. The use of inertial management units for relative navigation is known.

Image-based location determination is also known, and can be used for airborne platforms. Overflown terrain is imaged, and computationally matched to a stored database of imagery of the relevant region, or of salient features of the relevant region. For example, a database may store scale invariant feature transform (SIFT) points, or speeded up robust features (SURF) points of a relevant region. Such schemes can work well to match perceived image features to their equivalent in a database, especially if the region to be examined is relatively small. This may be the case if the location is constrained through knowledge of a prior-determined location. However, it is typically highly computationally intensive to determine a first location of a platform in a large possible search space. Significant time and/or processing power can be required; and storing the database of features can require a large amount of memory.

SUMMARY OF THE INVENTION

In accordance with a first aspect of the present invention there is provided a navigation method for an airborne platform, the airborne platform having a ground-facing camera having a field of view, and method comprising repeating a data capture cycle, the data capture cycle comprising the steps of:

    i. moving the sightline of the camera through a range of directions;

    ii. recording events triggered during motion of the sightline, each event being a change in intensity recorded at a pixel of the camera, and associating each event with a ground-referenced position; and

    iii. for each ground-referenced position, determining, from the recorded events, a resultant intensity gradient direction;

and the method further comprising determining the relative motion of the platform by comparing a distribution of resultant gradient intensities obtained in a current data capture cycle with a distribution of resultant gradient intensities obtained in an earlier data capture cycle.

There are a number of ways in which the comparison can be used to infer relative motion. For example, an overlap area may be identified between sequential data capture cycles, the position of which can be used to infer relative motion. The method enables relative navigation to be performed without an inertial management unit, or in conjunction with an inertial management unit to reduce drift. The reduction of drift may for example enable a lower quality inertial management unit to be used. Relative navigation can be performed for example during periods when an absolute determination of location is temporarily unavailable.

The step of recording events triggered during motion of the sightline may also comprise recording the ground-referenced direction of motion of the sightline at the time the event was captured.

The earlier data capture cycle may for example be an immediately preceding data capture cycle.

The field of view may include a plurality of patches of ground, and each data capture cycle may comprise the step of determining a signature for each of the plurality of patches, the signature being a distribution of resultant intensity gradients in said each of the plurality of patches. The signatures have been found to provide a computationally efficient manner in which to determine similarity between images of different patches. The comparison may comprise determining a number of translational shifts between pairs that match well in sequential data capture cycles, and inferring relative motion from these translational shifts.

In some cases, each recorded event may include an indication of the magnitude of the intensity change triggering the event. In other cases, the event may simply include an indication of whether the intensity change was positive or negative.

Step (iii) may comprise determining a resultant intensity gradient magnitude. The gradient magnitude may be calculated using a unit amplitude for each of the number of events recorded, or using the magnitudes of the intensity changes triggering the events.

The signature may represent a distribution of the resultant intensity gradient magnitudes in each of a set of direction intervals.

The plurality of patches may have a uniform size, and the camera field of view may cover an area on the ground that is at least twice the linear size of the uniform size. It may be that the camera field of view covers an area on the ground that is at least three times the linear size of the uniform size. It may be that the camera field of view covers an area on the ground that is at least four times the linear size of the uniform size.

The linear separation between the centres of the plurality of patches may be in the range between one hundredth and one quarter of the patch width.

The patch and the one or more further patches may be distributed evenly within a part of the camera field of view. It will be understood that part of the camera field of view may not be used.

The camera may be an event camera. Event cameras can be used to directly output the data needed to create the signatures.

The step of comparing one or more of the signatures obtained in a current data capture cycle with one or more of the signatures obtained in an earlier data capture cycle may comprise the step of determining a correlation between one or more of the signatures obtained in the current data capture cycle and one or more of the signatures obtained in the earlier data capture cycle. It may be that a correlation is determined between each of the signatures obtained in the current data capture cycle and each of the signatures obtained in the earlier cycle. However, it may be that a relative motion estimate is available, for example from previous data capture cycles; or from platform maximum velocity data, which can be used to limit the number of possible matches to a subset of the signatures.

The method may further comprise the steps of:

a) identifying, for one or more of the signatures obtained in the current data capture cycle, a best matching signature from the earlier data capture cycle, the best matching signature having the highest correlation with said each of the signatures obtained in the current data capture cycle, so as to identify matching signature pairs;

b) for each of the matching signature pairs, determining a translational shift between the patches associated with the matching signature pairs;

c) using the translational shifts to determine a relative position shift between the current data capture cycle and the earlier data capture cycle; and

d) inferring, from the relative position change, a translational movement of the platform between the current data capture cycle and an earlier data capture cycle.

The step of determining a relative position shift may comprise applying a consistency criterion to the translational shifts, and only using those matching pairs meeting the consistency criterion to determine the relative position shift. Since the translational shifts between genuine matching pairs should be the same, the consistency criterion is used to improve accuracy.

The step of determining a relative position shift may comprise determining the median of the translational shifts.

The consistency criterion may comprise determining that the translational shift is within a predetermined distance of the median translation shift. The predetermined distance may for example be in the range between one tenth and one patch width. The predetermined distance may be one half of a patch width.

The consistency criterion may comprise determining that the correlation score for the matching signature pairs is above a predetermined threshold.

The method may further comprise the step of, for each of the matching signature pairs meeting the consistency condition, determining an angular shift between signatures of the pair, and inferring, from the angular shifts, a change in heading of the platform.

The angular shift between a matching signature pair may maximise the correlation between the signatures in the pair. Alternatively, the step of determining an angular shift between signatures of the pair may comprise calculating a resultant vector for each of the signatures, and determining the difference between angles of the resultant vectors.

The orientation of the camera relative to the platform may remain constant whilst the sightline is moved.

The range may include directions of up to 180° from a starting direction. Alternatively, the range may include directions of up to 360 from a starting direction. A number of sightline motions are possible to enable this. For example, the sightline may be moved such that it defines a U-shape on the ground. The sightline may be moved such that it defines, generally, a half-circle on the ground. The sightline may be moved such that it defines, generally, a circle, ellipse, oval or other loop on the ground.

The sightline may be moved by nutating the camera. For example, the camera may be mounted on a two-axis gimbal arrangement.

Alternatively, the sightline may be moved by rotating a prism adjacent to the camera sensor; or the sightline may be moved by rotating a mirror in the sightline.

The invention extends to a computer-readable medium carrying instructions which, when read by a computer on-board an airborne platform, which airborne platform comprises a ground-facing camera having a movable sightline and a sensor operable to determine the platforms altitude above the ground, cause the computer to implement the method described above.

The invention further extends to an airborne platform comprising an event camera, a sensor operable to determine the altitude of the platform above the ground, and a processor, the event camera being arranged such that its sightline is movable; and the processor being configured to perform the method defined above.

The invention extends to an airborne platform comprising the apparatus defined above, wherein the event camera is arranged such that its sightline is movable relative to the platform.

BRIEF DESCRIPTION OF THE DRAWINGS

Embodiments of the invention will now be described by way of example only and with reference to the accompanying drawings, of which:

Figure 1 is a flow diagram illustrating steps of a method in accordance with an example of the invention;

Figure 2 is a schematic illustration of an aerial platform according to an example of the invention and operating the method of Figure 1;

Figure 3 is a schematic illustration of a patch of terrain;

Figure 4 is a graphical representation of a signature of the patch of Figure 3;

Figures 5a and 5b are schematic diagrams illustrating an arrangement of patches of a camera field of view;

Figure 6 is a flow chart illustrating steps of a method in accordance with a further example of the invention;

Figures 7a and 7b are schematic illustrations of a further platform in accordance with an example of the invention.

DETAILED DESCRIPTION OF THE INVENTION

OVERVIEW

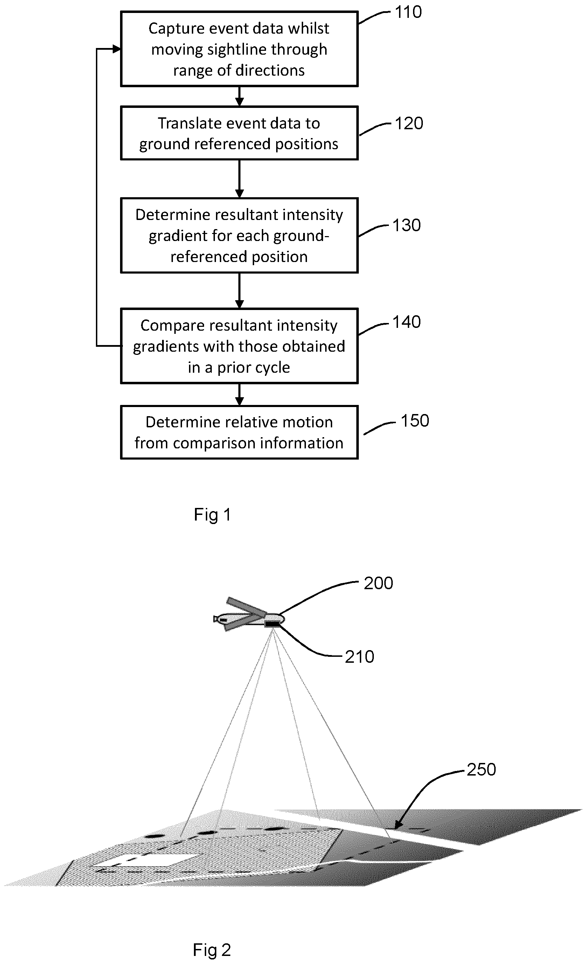

The embodiments described below provide an apparatus and method for the navigation of an airborne platform. Figure 1 is a flow chart 100 providing an overview of a method for navigating a platform in accordance with an embodiment of the invention. The platform has a ground-facing camera, and the method comprises repeating a data capture cycle. The data capture cycle includes steps 110, 120, 130 and 140. At step 150, the relative motion of the platform is determined from the outputs of the data capture cycle.

At step 110, event data is captured whilst the sightline of the camera is moved through a range of directions. Each event represents a change in intensity recorded at a pixel of the camera sensor. At step 120, the event data obtained is processed so as to associate each recorded event with a position on the ground. Each event is recorded at a camera pixel at a particular location on the camera sensor, and therefore in a camera sensor reference frame. This position is translated into a ground-referenced frame in order to associate the recorded event instead with a position on the ground. At step 130, at each ground-referenced position, a resultant intensity gradient is determined from the event data. Each event can also be associated with the direction in which the sightline was moving when that event was recorded, so that a vector sum of events at each ground-referenced position can be created as the resultant intensity gradient for that ground referenced position.

At step 140, a comparison is made of the resultant intensity gradients obtained in the current data capture cycle with resultant intensity gradients obtained in a previous data capture cycle. The set of resultant intensity gradients obtained in the different data capture cycles differ as a result of motion of the platform over the time period between the current and the earlier data capture cycle. With the assumption that there is some overlap of the camera field of view between the current and the earlier data capture cycles, the position of that overlap can be used to infer information about the platform motion between the current and earlier data capture cycles. The comparison is then used to determine, using the resultant intensity gradients, where this overlap is. If there is no overlap, various adjustments can be made to the process so that subsequent data capture cycles do show some overlap. For example, it may be possible to use a larger portion of the camera field of view to capture event data; it may be possible to zoom out the camera field of view; or it may be possible to speed up the data capture cycles by increasing the rate at which the camera sightline is moved through the range of directions. If it is possible to alter the platform flight, the likelihood of an overlap can be increased by flying either higher or by flying slower.

In step 150, the information from the comparison is used to determine relative motion of the platform. This can be achieved by identifying areas of overlap of the resultant intensity gradients between the two most current data capture cycles, in combination with the platform altitude above ground and the camera field of view angle so as to determine motion relative to the ground. The information may be fused with results from a larger number of data cycles using, for example, a Kalman filter; the information may be used with location data from other sources; or other analysis techniques may be used to determine relative motion.

One exemplary method of data comparison, described in further detail below, uses signatures associated with patches of ground for the comparison. The signatures used are the distribution of the resultant intensity gradients amongst a set of direction intervals for the ground referenced positions in each patch. Multiple and overlapping patches can be defined within the camera field of view, each patch covering a different part of the camera view. In each data capture cycle, the signatures for multiple patches are determined. Information about the motion of the platform can be inferred from a comparison of the signatures obtained for patches in sequential data capture cycles.

SIGNATURE CAPTURE

In use, the signatures are captured using an event camera located on the platform. Event cameras are a specific class of camera. Event camera sensors comprise a number of pixels, as would be found in standard camera sensors, but the event camera pixels do not report the intensity to which they are exposed, but the rate at which it is changing. A number of event cameras are known. One exemplary type of event camera comprises a detector with an array of pixels. An image is projected onto the array. Impinging photons are registered as an electrical signal, and the rate at which the photons are arriving is noted. Each pixel in the event camera detector also has a reference level, and a threshold. The photon arrival rate is equivalent to the scene intensity of the point corresponding to this pixel's position on the detector array. When the photon arrival rate of a given pixel differs from the reference level by more than the threshold amount, the pixel reference level is reset to the current intensity value, and the pixel sends an output to the camera computing core to register the change at this pixel's location. In this way, an asynchronous record can be kept, by the computing core, of the degree to which each area of the viewed scene is varying its intensity. In some cases, the pixel may alternatively or additionally send an output to the camera's external interface. The output may record only that the threshold level has been exceeded, or may record the amount by which the threshold level has been exceeded. In other words, the output may be simply that an event has occurred, or the output may record both that an event has occurred and the intensity of that event.

Standard framing camera pixels have a fixed capacitive well size and accumulate charge over a whole staretime. However each pixel has a finite storage capacity. If the rate of arrival of the photons is high enough, the pixel will saturate. That saturation limits the dynamic range of such cameras. Event cameras such as that described above do not have this limitation and have a significantly higher dynamic range than standard cameras. Event camera pixels typically fire and are registered in a period of the order of a millisecond; and up to of the order of 100 million events per second can be generated. Detector arrays for event cameras of size up to around one megapixel are available.

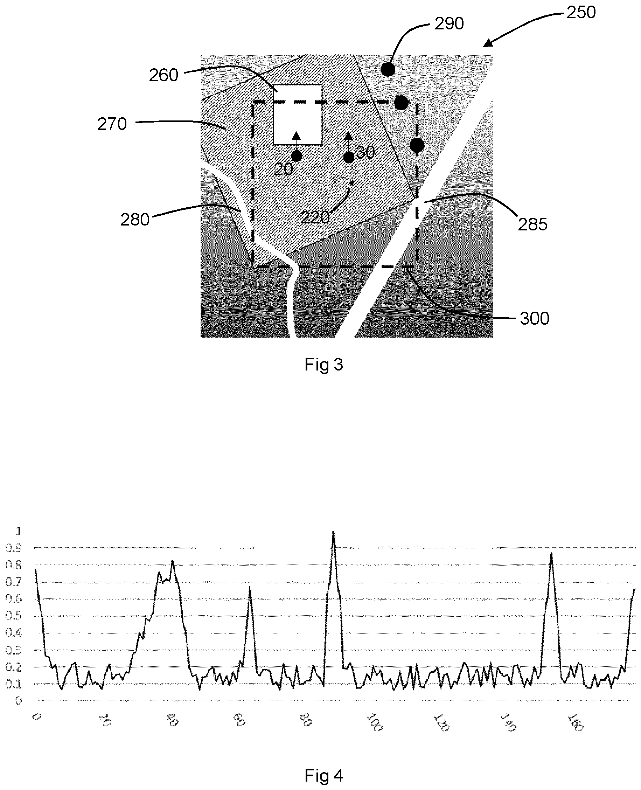

Figure 2 is a schematic illustration of a platform 200 flying over terrain 250. Platform 200 includes an event camera 210 that faces towards the ground and. The field of view of the camera is schematically illustrated in more detail in Figure 3. The field of view of the event camera covers a patch of terrain 300 illustrated by the box drawn in large-dashed line. In the following description, the 'upward' direction as seen in the Figure is referred to as 'north', with other directions referenced accordingly. A number of exemplary features are present in the field of view: a building 260 is located in a field 270; a stream 280 runs through the south-western corner of the field; a road 285 runs past the south-eastern corner of the field; and there are a number of bushes 290 in the north eastern corner of the field of view. As the platform 200 flies over the terrain, it moves the sightline of the event camera 210 in a range of directions. In this case the sightline is moved in a semi-circle 220 on the ground, such that it covers a 180° range of directions. The orientation of the camera is kept constant (for example, north facing) as the camera moves. As the sightline moves, the scene imaged by the event camera changes. The radius of the semi-circle is selected to be small relative to the overall size of the patch. There may be border portions of the patch which move out of the camera field of view whilst the sightline moves. These areas can be ignored in processing, but can be minimised by ensuring a small semi-circle radius. For example, the radius can be selected so that the initial ground-referenced centre of the semi-circle moves by only a few pixels on the camera sensor during the complete semi-circle. Thus, if the sightline motion begins in a northerly direction with a first point on the ground in the centre of the field of view, that first point will be at a distance of a diameter of the semi-circle, on the camera sensor, away from the centre of the field of view when the sightline completes its semi-circular motion and is moving in a southerly direction. The radius of the semi-circle may be selected to be between 5 and 20 pixels of the camera sensor.

As the sightline moves, the intensity recorded by some of the pixels of the event camera will change. Where the change in intensity is greater than the threshold value for any one pixel, that pixel will record an event. Two exemplary pixels are shown schematically at reference numerals 20 and 30 in Figure 3 close to the building 260. Pixel 20 is immediately south of building 260, whilst pixel 30 is south and east of the building 260. When the sightline moves such that these pixels image ground that is incrementally further north in one interval (as indicated by the arrows in Figure 3), pixel 20 will record an event as its view changes from one of field to one of building. Pixel 30 will not record an event, as it is too far to the east of building 260 for its view to change, and it will only view the field 270. The intensity recorded at pixel 230 will therefore not change by an amount as great as the threshold value. In contrast, when the sightline moves such that these pixels image ground that is incrementally further west, neither pixel will record an event, since both still view the field 270. An event camera controlled such that its sightline moves relative to the terrain from a particular point will therefore record a different number of events in dependence on the direction in which the sightline is moved. Sightline motion in a direction perpendicular to a linear image feature will typically cause far more pixels to be triggered than sightline motion parallel to the same feature.

In order to capture a signature for the patch of ground, the sightline is moved in a semi-circle whilst the orientation of the camera is kept constant. Events captured are output to a data processor, which maps the events to a ground referenced position. During a single cycle of data capture each recorded event is stored in an array of elements, each element having a ground-referenced position, and each event is allocated to the element having its associated ground-referenced position. The events are also associated with the direction in which the sightline was moving at the time of event capture. The array is the same size as the camera sensor.

In one example, the sightline can be moved so that its projection onto the ground has radius of 10 pixels, with the semi-circle starting with the sightline moving north in a clockwise direction. An event recorded as the sightline is moving north, at the start of the data capture cycle, is allocated to a first element in the array, and recorded with the sightline direction north. A subsequent event recorded when the sightline is moving in a direction 37° to the east of north and captured by a pixel on the camera sensor that is two pixels to the 'west' and six pixels to the 'south' of the pixel capturing the first event will also be allocated to the first element, since the projection of the sightline onto the ground has moved by this amount as it progresses around the semi-circle.

The events at each element of the array are summed as vectors. The vector direction is derived from the angle the direction of sightline motion makes to a reference direction such as north. In a semi-circle trajectory, only sightline directions between 0° and 180° are sampled. The event data for angles between 180° and 360° would be expected to be a mirror image of that between 0° and 180°, because events are triggered by an intensity change at any one pixel, regardless of whether that change represents an increase or a decrease in intensity. The angle used for each vector direction is therefore double the angle that the sightline motion makes to the reference direction. Once the sum is performed, the total angle is halved to obtain the direction of the resultant intensity gradient. Each event may have unitary magnitude, if the camera outputs only that an event has occurred, or may have a magnitude equivalent to the amount by which it exceeds the threshold value for that pixel, if that data is provided by the camera output.

The summing process produces a single resultant vector for each element, representing the resultant intensity gradient for the position on the ground to which that array element relates. The signature is then determined as the directional distribution of the resultant intensity gradients for the patch. A number of direction intervals are defined. For example, the intervals may have a size of 1°, so that a total of 180 intervals are defined for the full semi-circle of data capture. The resultant intensity gradients for each element are allocated to a respective interval, and their magnitude summed to determine the total value for each bin. In this way a histogram is created.

Figure 4 is a graphical illustration of a signature in the form of such a histogram. The signature has been normalised to the maximum. It will be seen that the illustration shows a general, background level of events at around 10% to 20% of the peak for each one degree interval. The background level may for example result from intensity variations observed within the boundaries of the features described, and from features such as bushes 290, which will result in a uniform number of events being recorded regardless of the direction of movement of the sightline. Relatively narrow spikes are seen at 0°, 90°, and 180°, arising from the intensity gradients at the edges of building 260. A relatively broad peak at around 40° arises from the stream 280, which does not have such a uniform direction as the walls of building 260. Peaks are also observed at around 65° and 155°, these arising from the edges of field 270. It will be seen that the peak at 155° is significantly higher than the peak at 65°, because only a part of the first edge is within the field of view.

It is possible to record more than one signature during each cycle of data capture (in other words, during one semi-circle of motion of the projection of the camera sightline). Consider a first, square patch having a side length L that is less than half the width of the minimum camera field of view projected onto the ground. As the sightline of the camera is moved, events will be created, some of which will fall within the patch. Various other patches can also be defined in the field of view. For example, a second patch, of the same shape and size as the first patch, may be positioned at a distance 0.1Z further north, and still fall within the field of view of the camera. A signature for this second patch can be created independently in the same data capture cycle as that for the first cycle, since all the necessary raw data is captured during the same sightline motion. Many events will fall into both patches, whilst some will be present only in one.

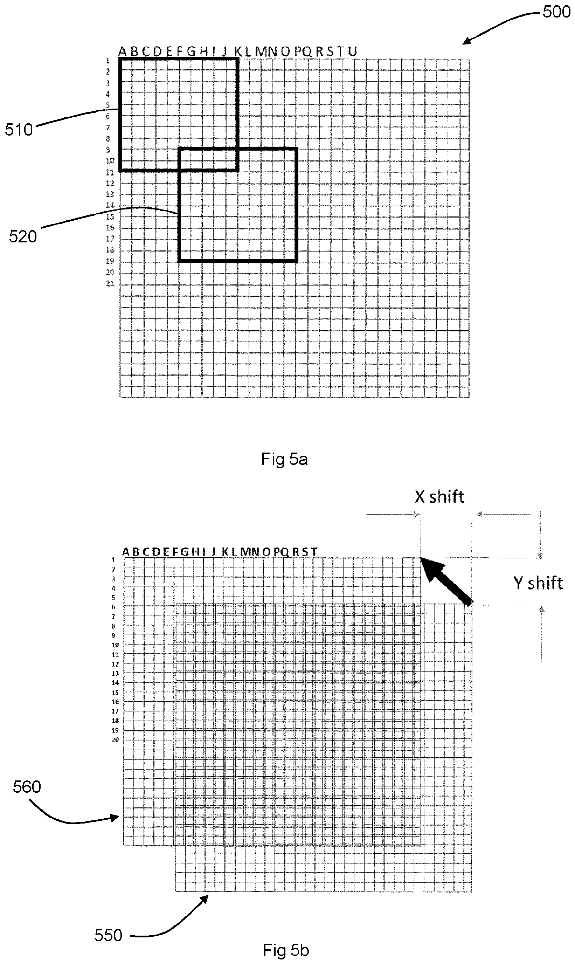

Four hundred such overlapping patches, all within a square of side length 3L, which fits within the camera field of view, can be used to create four hundred signatures from one data capture cycle. The recording of multiple such patches, and the determination of their signatures, enables a comparison of data obtained in sequential data capture cycles to be performed by determining which signatures best match. The layout of such a set of patches is illustrated in Figure 5a, which shows four hundred patches of width L in an area 500 of a field of view of a camera. Two patches, 510 and 520, are illustrated in bold outline for clarity. Using the reference coordinates provided along the top and side of area 500, the upper left corner of patch 510 is at coordinate A1, and the upper left corner of patch 520 is at coordinate F9. In frames recorded for subsequent frames, and as described above, many of the patches will overlap, as is illustrated schematically in Figure 5b for successive frames 550 and 560. From the overlap area, a translational shift of X in the horizontal direction (of slightly over 0.5Z in the example illustrated) and Y in the vertical direction (of slightly less than 0.5Z in the example illustrated) can be determined, as is explained in further detail below.

NAVIGATION

Comparison between two signatures is performed using analysis based on their correlation coefficient. In contrast to a direct comparison of two images, the calculation of these correlation coefficients can be performed at a speed suitable for use in real time navigation. With a suitable processor, all signatures obtained within a single data capture cycle can be correlated with every signature obtained in the previous data cycle. With the signatures captured as described above, tests using an HP Elitebook 835 G8 Notebook PC, operating with a 1.9 Ghz AMD Ryzen 7 PRO 5850U processor, have found that these correlations can be obtained within a time of well under 100 ms.

The correlation coefficients between each signature obtained in a data capture cycle and each signature obtained in the previous data capture cycle are therefore obtained. The correlation coefficient $C$ between signatures $S_i$ and $S_{i-1}$ is defined as:

$$C(S_i, S_{i-1}) = \frac{\sum(s_i - \bar{s_i})(s_{i-1} - \bar{s}_{i-1})}{\sqrt{\sum(s_i - \bar{s_i})^2 \sum(s_{i-1} - \bar{s}_{i-1})^2}}$$

where $S_i$ and $S_{i-1}$ are the individual elements of signatures $S_i$ and $S_{i-1}$ respectively, and the bar accent is used to indicate the average.

For each signature obtained in the current data capture cycle, a best match signature from the previous data capture cycle can therefore be determined as being the signature having the highest correlation coefficient with that signature. As the platform moves, the camera field of view moves, but the field of view for the current data capture cycle is expected to overlap with that for the previous data capture cycle. Patches from the overlap area in the current data capture cycle should strongly correlate with patches from the overlap area in the previous data capture cycle.

Comparison of the relative positions of a pair of matching signatures in the current and previous data capture cycle can provide information about relative motion of the platform between the two data capture cycles. In the overlap area the shift in position between matching signatures should be consistent, and, given the platform altitude above the ground and the angular field of view of the camera used, this shift can be used to infer the distance moved by the platform during the time elapsed between data capture cycles. The platform may carry an altimeter in order to determine its altitude above ground. Computation may be reduced if relative motion data, available from previous data capture cycles or from other sources, can be used to infer a range of possible relative motion for a current cycle. Pairs having a position shift outside this range of possibilities can be discounted.

It is possible that other matches may also be found, and various methods can be used to discount these. One or more consistency criteria may be applied to the matching signatures. For example, a threshold value may be set for the correlation coefficient, and pairs having a correlation score below this value can be ignored. As described in further detail below, the median shift in position between matching pairs can be used as a consistency criterion.

Once inconsistent pairs have been discounted, the shifts between the remaining matching pairs can be used to provide multiple estimates of the relative position change between the two data capture cycles. An average of these estimates can be used as an output relative motion value. For example, a platform having a camera with a square field of view of ground side length 300 m may image 400 square patches of side length of 100 m in a single data capture cycle. The individual patches are evenly distributed across a square grid in the field of view, with their centres separated by 10 m. For a platform travelling at 80 ms-1, with data capture cycles separated by 1 s, there will be 240 overlapping patches, and therefore 240 distinct estimates of relative position shift. An average of these estimates can be used as an output relative motion estimate for the data capture cycle.

In the event that the platform heading has changed between data capture cycles, further processing of the signatures can be performed. Given the time period between data capture cycles, it is unlikely that the heading will significantly change, and so there are still likely to be a number of patches with strong correlation between successive data capture cycles. Where a translational shift has been determined, matching pairs consistent with that shift can be used to determine a heading change. The correlation scores for the signatures for these matching pairs can for example be determined repeatedly, each time shifting one of the signatures by one interval, and determining which shift results in the maximum correlation coefficient. The heading change from the previous data capture cycle to the current data capture cycle can be inferred from the shift resulting in the maximum correlation score. An alternative method of estimating the heading change is described in further detail below.

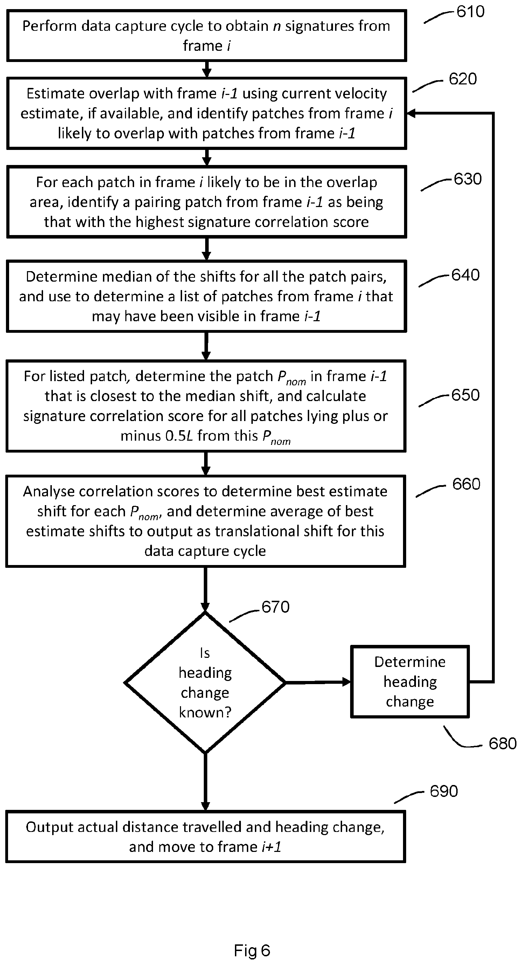

Figure 6 is a flow diagram illustrating the steps in one example method that can be performed to determine the shift, using correlation between signatures, to a high precision.

At step 610, a data capture cycle is performed to obtain n signatures from frame *i*. Optionally, if an estimate of current velocity and acceleration is available, an estimate of the overlap between frames *i* and *i-1* is determined at step 620. This estimate is used to identify patches in frames *i* and *i-1* that may lie in the overlap area. Step 620 is used to reduce the number of calculations that need to be performed in each iteration of the method, so as to focus only on possible overlapping patches, rather than patches for which overlap is not possible given current motion data. It can be omitted if such a reduction is not necessary, or if no current motion data is available.

At step 630, the correlation coefficient C between signatures $S_i$ and $S_{i-1}$ for each combination of possibly overlapping patches in frames $i$ and $i-1$ is determined. For each such patch in frame $i$, a pairing patch in frame $i-1$, identified as that patch in frame $i-1$ with which the patch in frame $i$ has the highest correlation coefficient, is noted. The shift of the pairing patch, in the camera sensor frame, is noted.

At step 640, the median of the shifts between pairing patches is determined, and used to create a list of patches in frame $i$ which may have been visible in frame $i-1$. For each patch in this list, a nominal patch $P_{nom}$ from frame $i-1$ is identified as being the closest matching patch. $P_{nom}$ is determined as being the patch in frame $i-1$ that is closest to the median shift from the list patch. The correlation coefficient for all patches that lie within a predetermined distance from $P_{nom}$, with the list patch, is then determined. The predetermined distance may for example be 0.5$L$ in both the horizontal and vertical directions. This sets a consistency criterion for the determination of the relative position shift, since the individual translational shifts between the matching pairs are constrained to be consistent to within 0.5$L$, with those pairs outside this range discounted.

At step 660, the correlation coefficients obtained at step 650 are further analysed to determine a more precise shift. The coefficients are plotted so as to form a correlation surface for each $P_{nom}$, which will be expected to be peaked around the actual shift between the two frames. A threshold score is used to delineate the peak, and the shift determined as the weighted centroid of this peak. The threshold can be a one object threshold, or in other words the lowest threshold at and above which only one contiguously connected set of selected points lies. The estimated shift for the data capture cycle is then determined as the mean of the weighted centroid positions for all the $P_{nom}$.

At step 670, if the heading change has not yet been calculated, the process moves to calculate a heading change at step 680. If the heading change has already been calculated, the process moves to step 690. Whilst the position of the overlap can be used to calculate a translational shift, any heading change can be determined from shifts in the signatures of the matching patches. As will be appreciated, if a platform heading has changed by an angular amount, the position of features in the signature will be shifted by the same angular amount. The heading shift is calculated using the resultant vector angles of the signatures for each of the patches listed in step 640.

The resultant vector angle is calculated by doubling the angle of each interval in the signature, and then creating a vector sum of the signature. In other words, for each interval, a vector is created using the amplitude at that interval, and an angle of double the angle for that interval; all the vectors created in that way for the signature are summed, and the resultant vector defined as having the amplitude of the result, but half the angle. The angle-doubling is required in the present example because the signature describes a system in which the actual responses are (effectively) symmetrical when reflected across the whole 360°. In other words, the bin amplitude at 0° represents the same amplitude as the bin at 180°. A simple average of a signature in which the only the 0 and 180° bins, and were filled, with equal amplitude, would result in a mean angle of 90°, which would be incorrect.

The resultant vector angle $A_i$ is calculated for each of the signatures of the patches listed in step 640. The resultant vector angle $A_{i-1}$ for the signature of the nominal matching patch $P_{nom}$ from frame $i-1$ is also calculated, and the angular shift from angle $A_i$ to angle $A_{i-1}$ determined. Once all the shifts have been calculated, a mean vector angle, weighted by the amplitude of the resultant vector for each signature is determined. The standard deviation of the mean vector angle is also determined. The calculation of the mean is then repeated, but ignoring values outside of a range of two standard deviations above or below the mean. Since the angle change may affect the translational shift calculation, the process returns to step 620 and repeats the calculation of translational shift.

At step 690, the actual displacement is determined using platform altitude above ground and camera field of view to translate the shift in positions on the camera sensor to the ground distance and direction travelled. The actual distance output can be used to update the platforms estimate of its current motion.

Optionally, various adjustments may be made to the captured data to compensate for artefacts arising from the configuration of the apparatus and/or the conditions in which it is desired to navigate. For example, where the camera does not look directly down, a geometric adjustment must be made before processing the data from the camera so as to ensure that the pixels used to calculate any one signature form a square on the ground, and not a square on the camera sensor. Similarly, some adjustments may need to be made in order to compensate for any lens distortions should these have the potential to significantly impact the signature. If geometric adjustments are necessary to ensure a ground-referenced position is used, it may also be necessary to make similar adjustments to ensure that a ground-referenced direction is used for calculating the signature, and not a direct measure of the heading of the sightline in the camera frame of reference.

If the sightline motion, projected onto the ground, deviates from a true semi-circle (or circle, if a full 360° rotation is used for each signature), an adjustment should be made to weight each interval by the angle turned through with respect to the centre of sightline motion pattern. Note that this angle is not the same as the signature interval angle, which is determined by the direction of motion of the sightline projected onto the ground. By way of example, such a weighting must be applied where the sightline projection forms an ellipse on the ground, for which a larger number of events than expected would be recorded per signature interval as the sightline moves parallel to the major axis, whilst a smaller number of events would be recorded as the sightline moves parallel to the minor axis.

In some applications, embodiments of the invention are likely to be used as part of a wider navigation system, incorporating other systems and integrated into wider navigation loops. Other systems may include a device for the receiving GPS signals, or other means of obtaining an absolute indication of the position of the platform. The platform may then include a processor operable to use the relative motion obtained by the above method in combination with an absolute position measurement in order to maintain one or more track hypotheses for the platform.

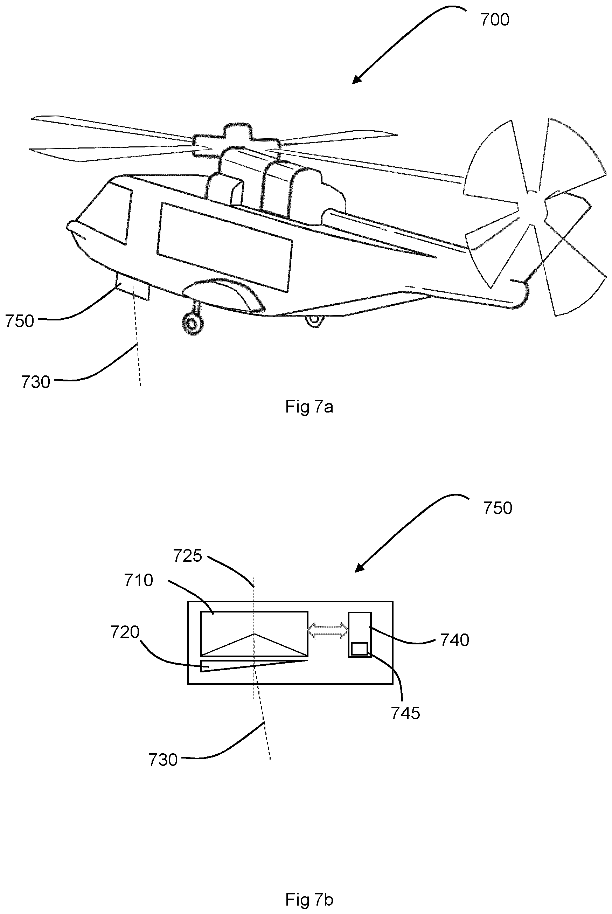

In one example illustrated in Figures 7a and 7b, the platform may be a helicopter 700 equipped with a navigation apparatus 750. The navigation apparatus 750 is shown in more detail in Figure 7b and includes a downward-facing event camera 710 operable, for example, in the LWIR waveband. When the helicopter is in level flight, therefore, the event camera will face towards the ground. Figure 7a is an illustration of the navigation apparatus 750 mounted on helicopter 700. As is shown in Figure 7b, the navigation apparatus comprises an event camera 710 and a processor 740 including a memory store 745. A thin wedge prism 720 is mounted in front of the event camera. The thin wedge deflects the sightline, indicated in dashed line 730 in Figures 7a and 7b, of the event camera through a small angle. The centre point of the event camera field of view (in other words, where the sightline 730 projects onto the ground) is therefore offset slightly from immediately beneath the helicopter. The angular deflection provided by the prism is a small fraction of the angular width of the camera's angular field of view. Prism 720 is mounted so that it is able to rotate in a complete circle about a vertical axis (when the helicopter is in level flight) that is illustrated by the dotted line 725 in Figure 7b. As the prism rotates, the centre point of the event camera field of view will define a circle on the ground beneath the helicopter 700. If the helicopter is hovering, the circle will be centred on a point immediately beneath the helicopter. In this example, the helicopter is also equipped with an independent means for sensing its orientation. For example, it may have a magnetic compass. The helicopter in this example is also equipped with an altimeter.

The event camera is configured to have a field of view corresponding, on the ground, to a square of at least twice the desired patch width, at the flight altitude of the helicopter. This can be achieved by zooming the event camera, or by altering the flight altitude of the helicopter, by a combination of zoom and altitude change, or by adjusting the patch size. In the present example, the patches are defined as a particular set of pixels of the image sensor, and so dynamically adjust in terms of size projected onto the ground as the helicopter is flying.

Whilst flying, the prism is rotated, and a signature recorded for the first half of each rotation of the prism. The recording of a signature for each rotation is started when the projection of the sightline on the ground is offset by the nutation radius to the north, defined as 0° in the present example, and is stopped once the projection of the sightline has completed a rotation around a semicircle. The next data capture cycle is started with the sightline returned to its initial 0° orientation.

The event camera trigger threshold can be set in dependence on the type of terrain in the region over which the helicopter is flying. The trigger threshold may also for example be determined as a parameter prior to flight, and provided to the helicopter. The rate of rotation of the prism is not critical but is kept constant, and is preferably fast to enable the data for a complete signature to be captured whilst the helicopter remains relatively stationary, so that its forward motion during the time for collection of data for one patch is small or negligible compared to the length of the patch. The overall data capture cycle is repeated frequently enough that, at the approximate flight speed, there will be an overlap between the fields of view recorded in sequential data capture cycles. The actual rate of rotation used will be dependent on various factors, including for example: the angular resolution of the image, the size of the field of view of the camera, the helicopter altitude, the size of the event camera's pixel array, its maximum pixel processing rate, and other factors. A signature is captured as described above.

Various modifications to the above described embodiment are possible. For example, whilst in the above example it has been described that the platform is a helicopter, the location determining method will also work on other airborne platforms. It will also be understood that alternative methods of moving the camera sightline through a range of directions are possible. For example, the event camera itself could be moved in a rocking motion to compensate for the forward motion of the platform such that the locus of the sightline on the ground always does describe the desired trajectory. Further alternatively, rocking the event camera sightline from left to right at an appropriate frequency whilst the platform is in forward motion can result in the sightline creating a locus of connected semicircles. Each semicircle can be used to derive a signature.

Whilst, in the above, it has been described to apply geometric transformations to the data in order to account for any forward-looking angle of the sensor, it will be understood that it may alternatively be possible to modify the event camera sightline motion to compensate for any forward-looking angle and forward motion of the platform. Such a determination may not be possible for very large slant angles, or only possible with limited accuracy. Some degree of forward-looking is however possible. Similar considerations apply if the platform is not in level flight.

Since an event camera could be used as a forward looking imager in a range of potential aircraft, including unmanned air systems and missiles, it will be noted that an event camera could fulfil multiple roles for the platform, including both imaging and navigation.

It has also been described in the above to use an event camera operating in the LWIR waveband. However, it would also be possible to use event cameras operating in other parts of the spectrum, such as in the visible region, Short Wave (SWIR) or medium wave infrared (MWIR). Many event cameras are commercially available that operate in the visible part of the spectrum. Where an event camera operating in the visible waveband is to be used, it may also be desirable to include an illumination source, such as a laser, so as to enable operation of the navigation apparatus at night.

It will also be understood that, whilst it has been described to use a generic event camera in the above, any type of event camera could be used. A review of event cameras is provided in Gallego et al., 'Event-Based Vision: A Survey', published in IEEE Transactions on Pattern Analysis and Machine Intelligence, Vol. 44, No. 1, pages 154 to 180, January 2022. There may be many different capture patterns for the data. The trigger threshold for each camera pixel, for example, could be set differently for different event cameras, so as to ensure that the number of triggers does not exceed the rate at which they can be handled by the relevant processor (either a processor embedded in the camera, or a platform processor dedicated to the processing of the event camera data). The trigger threshold can also be adjusted during operation of the navigation method, for example to ensure that the number of events recorded falls within a certain range or below a certain threshold.

It may also be possible to use a standard framing camera coupled with suitable processing, although this would require significant processing power in order to operate. For example, it may be possible to use a framing camera in combination with an event camera emulator; or it may be possible to use frame differencing, with a suitably fast frame rate, to identify events when the difference exceeds a trigger. However, given processing requirements, an event camera directly outputting events from pixels responsive to changes in intensity is more likely to be used for embodiments of the present invention.

It will also be possible to use different means of moving the camera sightline, in alternatives to the above-described method of rotating a thin wedge prism in front of the event camera sensor. For example, the sightline could be relayed from the scene to the sensor via a mirror, tilting the mirror surface, and rotating the mirror so that the sightline on the ground describes a circle. In this case, the tilt of the mirror may also be controllable, which may enable compensation of forward platform motion, and enable the radius of the circle described on the ground by the sightline to be controlled. It may also be possible to change the sightline using a spatial light modulator or an acousto optic crystal. Alternatively, the event camera sensor itself may be nutated so as to move the sightline, for example by providing a suitable 1 or 2 axis gimbal arrangement. The camera can then be nutated such that its sightline defines a circle on the ground, compensating for any forward motion. The camera can then be angled such that its sightline moves linearly forwards along the ground before starting a further nutation for a subsequent data capture cycle. This method has the advantage that it can be used to capture data from a semi-circle starting at any orientation. It should be noted that signatures recorded from a complete rotation will not be perfectly symmetrical about 180°, because a relative intensity trigger threshold for an event camera may only be passed when crossing a feature in one direction but not the other.

Whilst it has been described in the above to use patches that are square shaped, it will be understood that the patches themselves could take any shape. For example, the patches could be circular; or polygonal.

Whilst, in the above, various particular methods of determining relative motion have been described based on the use of signatures, it will be understood that it may be possible to determine relative motion without the use of such signatures. For example, if a rough idea of the translational shift between two data capture cycles is available, it may be possible to compare the overall sum of absolute differences between the two whole overlap areas, shifting the areas by a few pixels in each direction (for example between 2 and 10 pixels in each direction), and find the overall shift which minimises the sum of absolute differences. Further alternatively, each position in a first data capture cycle could be compared with the nominally corresponding position in a second data capture cycle and its nearest neighbours (or its nearest neighbours, and its next nearest neighbours). For each position in the first data capture cycle, the offset of the best mactch is noted, and the mean of all the shifts used to determine relative motion.

Finally, it should be clearly understood that any feature described above in relation to any one embodiment may be used alone, or in combination with other features described, and may also be used in combination with one or more features of any other of the embodiments, or any combination of any other of the embodiments. In particular it should be noted that in all of the above embodiments, the processor hardware may be built specifically for the purpose of controlling apparatus, or, particularly if the apparatus is to be operated in a missile or other aerospace or vehicle platform, may be firmware installed on a platform processor; or the processor may be a general purpose computer with software installed to control the apparatus as described above.

**Claims**

1. A navigation method for an airborne platform, the airborne platform having a ground-facing camera having a field of view, and method comprising repeating a data capture cycle, the data capture cycle comprising the steps of:

i. moving the sightline of the camera through a range of directions;

ii. recording events triggered during motion of the sightline, each event being a change in intensity recorded at a pixel of the camera, and associating each event with a ground-referenced position; and

iii. for each ground-referenced position, determining, from the recorded events, a resultant intensity gradient direction;

and the method further comprising determining the relative motion of the platform by comparing a distribution of resultant gradient intensities obtained in a current data capture cycle with a distribution of resultant gradient intensities obtained in an earlier data capture cycle.

2. A method as claimed in claim 1, wherein the field of view includes a plurality of patches of ground, and wherein each data capture cycle comprises the step of determining a signature for each of the plurality of patches, the signature being a distribution of resultant intensity gradients in said each of the plurality of patches.

3. A method as claimed in any one of claims 2 to 9, wherein the step of comparing one or more of the signatures obtained in a current data capture cycle with one or more of the signatures obtained in an earlier data capture cycle comprises the step of determining a correlation between one or more of the signatures obtained in the current data capture cycle and one or more of the signatures obtained in the earlier data capture cycle.

4. A method as claimed in claim 10, further comprising the steps of:

a) identifying, for one or more of the signatures obtained in the current data capture cycle, a best matching signature from the earlier data capture cycle, the best matching signature having the highest correlation with said each of the signatures obtained in the current data capture cycle, so as to identify matching signature pairs;

b) for each of the matching signature pairs, determining a translational shift between the patches associated with the matching signature pairs;

c) using the translational shifts to determine a relative position shift between the current data capture cycle and the earlier data capture cycle; and

d) inferring, from the relative position change, a translational movement of the platform between the current data capture cycle and an earlier data capture cycle.

5. A method as claimed in claim 11, wherein the step of determining a relative position shift comprises applying a consistency criterion to the translational shifts, and only using those matching pairs meeting the consistency criterion to determine the relative position shift.

6. A method as claimed in claim 11 or claim 12, wherein the step of determining a relative position shift comprises determining the median of the translational shifts.

7. A method as claimed in claim 13 when dependent on claim 12, wherein the consistency criterion comprises determining that the translational shift is within a predetermined distance of the median translation shift.

8. A method as claimed in claim 13 when dependent on claim 12, wherein the consistency criterion comprises determining that the correlation score for the matching signature pairs is above a predetermined threshold.

9. A method as claimed in any one of claims 12 to 15, further comprising the step of, for each of the matching signature pairs meeting the consistency condition, determining an angular shift between signatures of the pair, and inferring, from the angular shifts, a change in heading of the platform.

10. A method as claimed in claim 16, wherein the angular shift between a matching signature pair maximises the correlation between the signatures in the pair.

11. A method as claimed in claim 16, wherein determining an angular shift between signatures of the pair comprises calculating a resultant vector for each of the signatures, and determining the difference between angles of the resultant vectors.

12. A computer-readable medium carrying instructions which, when read by a computer on-board an airborne platform, which airborne platform comprises a ground-facing camera having a movable sightline and a sensor operable to determine the platforms altitude above the ground, cause the computer to implement the method of any one of claims 1 to 23.

13. An airborne platform comprising an event camera, a sensor operable to determine the altitude of the platform above the ground, and a processor, the event camera being arranged such that its sightline is movable; and the processor being configured to perform the method of any one of claims 1 to 23.

Capture event data whilst moving sightline through range of directions — 110

Translate event data to ground referenced positions — 120

Determine resultant intensity gradient for each ground-referenced position — 130

Compare resultant intensity gradients with those obtained in a prior cycle — 140

Determine relative motion from comparison information — 150

Fig 1

200

210

250

Fig 2

Fig 3

Fig 4

500

510

520

Fig 5a

X shift

Y shift

560

550

Fig 5b

Perform data capture cycle to obtain *n* signatures from frame *i* — 610

Estimate overlap with frame *i-1* using current velocity estimate, if available, and identify patches from frame *i* likely to overlap with patches from frame *i-1* — 620

For each patch in frame *i* likely to be in the overlap area, identify a pairing patch from frame *i-1* as being that with the highest signature correlation score — 630

Determine median of the shifts for all the patch pairs, and use to determine a list of patches from frame *i* that may have been visible in frame *i-1* — 640

For listed patch, determine the patch $P_{nom}$ in frame *i-1* that is closest to the median shift, and calculate signature correlation score for all patches lying plus or minus 0.5$L$ from this $P_{nom}$ — 650

Analyse correlation scores to determine best estimate shift for each $P_{nom}$, and determine average of best estimate shifts to output as translational shift for this data capture cycle — 660

Is heading change known? — 670

Determine heading change

680

Output actual distance travelled and heading change, and move to frame *i+1* — 690

Fig 6

700

750

730

Fig 7a

750

725

710

720

740

745

730

Fig 7b

# EP 4 682 468 A1

Europäisches
Patentamt

European
Patent Office

Office européen
des brevets

## EUROPEAN SEARCH REPORT

**Application Number**

EP 24 27 5090

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/057213 A1 (SINGHAL ABHAY [US] ET AL) 24 February 2022 (2022-02-24) * paragraphs [0039] - [0043]; claim 1 * ----- | 1,12,13 | INV. G01C21/00 |
|  |  |  | **TECHNICAL FIELDS SEARCHED (IPC)** |
|  |  |  | G01C |

The present search report has been drawn up for all claims

| Place of search | Date of completion of the search | Examiner |
|---|---|---|
| The Hague | 13 December 2024 | Tabellion, Marc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 27 5090

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2024

| Patent document cited in search report | Publication date | Patent family member(s) | Publication date |
|---|---|---|---|
| US 2022057213 A1 | 24-02-2022 | NONE | |

For more details about this annex : see Official Journal of the European Patent Office, No. 12/82

# EP 4 682 468 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GALLEGO et al.** Event-Based Vision: A Survey. *IEEE Transactions on Pattern Analysis and Machine Intelligence*, January 2022, vol. 44 (1), 154-180